# EUROPÄISCHE PATENTANMELDUNG

(11) **EP 0 683 031 A2**
(43) Veröffentlichungstag der Anmeldung: **22.11.1995**
(21) Anmeldenummer: 95106902.0
(22) Anmeldetag: 08.05.1995
(51) Int. Cl.: B29C 69/00, B29C 45/16

(54) **Verfahren zum Herstellen mehrteiliger Spritzguss-Formteile und Werkzeug zur Durchführung des Verfahrens**

(30) Priorität: 21.05.1994 DE 4417979
(71) Anmelder: Siegfried Hofmann GmbH Werkzeugbau, D-96215 Lichtenfels (DE)
(72) Erfinder: Mai, Georg, Dipl.-Ing. (FH), D-96215 Lichtenfels (DE)
(74) Vertreter: Metzler, Jürgen, Dipl.-Ing.

(57) **Zusammenfassung**

Es handelt sich um ein Verfahren zum Herstellen mehrteiliger Spritzguß-Formteile aus Kunststoff sowie ein Spritzgießwerkzeug zur Durchführung des Verfahrens. Beim Werkzeug ist wenigstens eine Zwischenscheibe oder -platte (3) vorgesehen, die abwechselnd Formkonturen (10, 11) zur Bildung der Formnester (6, 7) und Durchgangsöffnungen zum axialen Zusammenführen der Einzelteile (6', 7') aufweist. Die Zwischenplatte (3) ist dreh- oder verschiebbar gelagert und jeweils mit ihren Formkonturen (10, 11) oder den Öffnungen in Korrelation mit den Formnestern (6, 7) positionierbar. Der gesamte Fertigungsvorgang wird in ein und demselben Werkzeug durchgeführt, wobei die Einzelteile (6', 7') des zu fertigenden Formteils gleichzeitig in einem Schuß getrennt voneinander gespritzt und anschließend unter Verbleib in ihren Formnestern (6, 7) axial zusammengeführt und form- und/oder kraftschlüssig zu einer Einheit montiert werden. Hierdurch ist eine vereinfachte und genaue Herstellung mehrteiliger Spritzguß-Formteile in einem Arbeitsgang möglich.

## Beschreibung

Die Erfindung bezieht sich auf ein Verfahren zur Herstellung mehrteiliger Spritzguß-Formteile aus Kunststoff sowie auf ein Spritzgießwerkzeug zur Durchführung des Verfahrens.

Beim Spritzgießen werden die Formkörper in der Weise hergestellt, daß der plastisch formbare Werkstoff in den Hohlraum (Formnest) eines geschlossenen Werkzeugs unter Druck eingespritzt wird und danach durch Wärmeentzug erstarrt oder durch chemische Umwandlung verfestigt. Das hierfür benötigte Werkzeug besteht aus zwei Werkzeughälften, die jeweils Teilkonturen des Formnestes oder - bei Mehrfach-Spritzgießwerkzeugen - der Formnester tragen, die sich beim Schließen des Werkzeugs zum die Form des Fertigteils bestimmenden vollen Formnest ergänzen. Auf diese Weise ist es möglich, einteilige Fertigteile herzustellen. Zur Herstellung mehrteiliger Formteile ist es notwendig, die in der oben beschriebenen Weise gefertigten Einzelteile dem Werkzeug zu entnehmen und außerhalb des Werkzeugs in entsprechend ausgebildeten weiteren Vorrichtungen oder gar von Hand zum mehrteiligen Fertigteil zu montieren. Dies ist nicht nur zeitaufwendig, sondern stört auch den Fertigungsfluß und erfordert zusätzliche Fertigungsschritte, wie erneutes gegenseitiges Ausrichten der Einzelteile usw. Auch kann es zu einer Beschädigung und Verschmutzung der Einzelteile vor der Montage kommen. Insgesamt verteuert sich dadurch die Herstellung.

Die Aufgabe der Erfindung besteht darin, ein Verfahren der im Oberbegriff des Anspruches 1 angegebenen Art sowie eine Vorrichtung zur Durchführung dieses Verfahrens zu schaffen, die zu einer vereinfachten Herstellung mehrteiliger Spritzguß-Formteile führen. Mit der Vorrichtung soll es möglich sein, die einzelnen Fertigungsschritte in einem Arbeitsgang zusammenzufassen, so daß der zeitliche Herstellungsaufwand entsprechend verringert wird und Fertigteile hoher Genauigkeit erzeugt werden.

Zur Lösung dieser Aufgabe sind bei der Erfindung die im kennzeichnenden Teil des Hauptverfahrensanspruches angegebenen sowie im Hauptvorrichtungsanspruch enthaltenen Merkmale vorgesehen. In den diesen Ansprüchen folgenden Ansprüchen sind für die Aufgabenlösung vorteilhafte und förderliche Weiterbildungen beansprucht.

Bei der Herstellung mehrteiliger Spritzguß-Formteile wird also der gesamte Fertigungsvorgang in ein und demselben Werkzeug durchgeführt, derart, daß die Einzelteile des Formteils gleichzeitig in einem Schuß gespritzt und anschließend diese Einzelteile in ihren Formnestern oder Teilen dieser Formnester verbleiben und zu einer Einheit montiert werden und erst nach der Fertigmontage dem Werkzeug entnommen werden. Eine Beschädigung und Verschmutzung der Einzelteile ist damit ausgeschlossen. Die Montage erfolgt durch axiales Zusammenführen der Einzelteile und form- und/oder kraftschlüssige Verbindung derselben zur Einheit. Der eigentliche Montageschritt wird durch eine einfache axiale Bewegung entsprechend der Schließbewegung des Werkzeugs realisiert. Die Einzelteile müssen also vor dem Montagevorgang nicht neu ausgerichtet werden, sondern behalten ihre beim Spritzvorgang erhaltene Lageausrichtung bei, so daß ein hochpräzises Zusammenfügen der Einzelteile zum Fertigteil möglich ist. Zusätzliche äußere Montage- oder Handlingsvorrichtungen entfallen. In weiterer Ausgestaltung der Erfindung ist vorgesehen, zumindest teilweise im Bereich der zwischen den montierten Einzelteilen gebildeten Trennfuge oder Trennfugen zusätzlich Kunststoff einzuspritzen, der zum einen eine gute Verbindung der Einzelteile bewirkt und zum anderen eine sichere Abdichtung ergibt, so daß z.B. auf diese Weise Hohlkörper hergestellt werden können. Da die einfache axiale Montagebewegung die gleiche Richtung wie die Schließbewegung des Werkzeugs hat, läßt sie sich ohne Einsatz zusätzlicher Getriebe verwirklichen, so daß das Werkzeug einfach im Aufbau und damit störunanfällig gehalten werden kann. Das Spritzgießwerkzeug zur Durchführung des Verfahrens weist wenigstens eine Zwischenscheibe oder -platte auf, die abwechselnd Teilkonturen zur Bildung der Formnester für die Einzelteile und Durchbrüche oder Durchgangsbohrungen zum axialen Zusammenführen der Einzelteile besitzt. Die Zwischenscheibe oder -platte ist drehbar - vorzugsweise bei rotationssymmetrischer Ausbildung - oder verschiebbar - beispielsweise linear - gelagert und jeweils zum Spritzen und Zusammenführen der Einzelteile mit ihren Teilkonturen und den Durchbrüchen in Korrelation mit den gespritzten Einzelteilen positionierbar. Dabei ist wenigstens ein Formnest für ein Einzelteil in einem axial verschiebbaren Stempel angeordnet, der beim axialen Zusammenführen der Einzelteile einen der Durchbrüche der Zwischenplatte durchgreift. Nach einem weiteren Merkmal der Erfindung ist das Spritzgießwerkzeug als Mehrfachwerkzeug ausgebildet, so daß gleichzeitig mehrere Fertigteile in einem Schuß herstellbar sind. Zweckmäßigerweise ist die Geometrie und Ausbildung der Formnester in der Weise gewählt, daß beim Zusammenführen der Formnester, also beim Montagevorgang, im Bereich der Trennfuge oder -fugen ein Hohlraum verbleibt, der zum Abdichten der Fertigteile mit Kunststoff gefüllt wird.

Insgesamt wird eine Vereinfachung der Herstellung von aus mehreren Einzelteilen bestehenden Fertigteilen im Spritzgießverfahren bei höchster Präzision der hergestellten Teile erreicht. Die Montage der Einzelteile durch axiales Zusammenführen innerhalb des Spritzwerkzeugs kann sowohl kraft- als auch formschlüssig erfolgen, wobei ggf. auch noch die vorhandene Restwärme der gespritzten Einzelteile ausgenutzt werden kann, um eine besonders feste Verbindung der Einzelteile zu erreichen.

Die Erfindung wird nun anhand eines Ausführungsbeispiels im Zusammenhang mit der Zeichnung näher erläutert. Es zeigen:
- Fig. 1: einen Querschnitt des Spritzgießwerkzeugs in vereinfachter abgebrochener Darstellung während des Spritzvorgangs,
- Fig. 2: einen Querschnitt des Spritzgießwerkzeugs während des Montagevorgangs und
- Fig. 3: eine Ansicht der Zwischenplatte bzw. -scheibe des Werkzeugs in verkleinerter abgebrochener Darstellung.

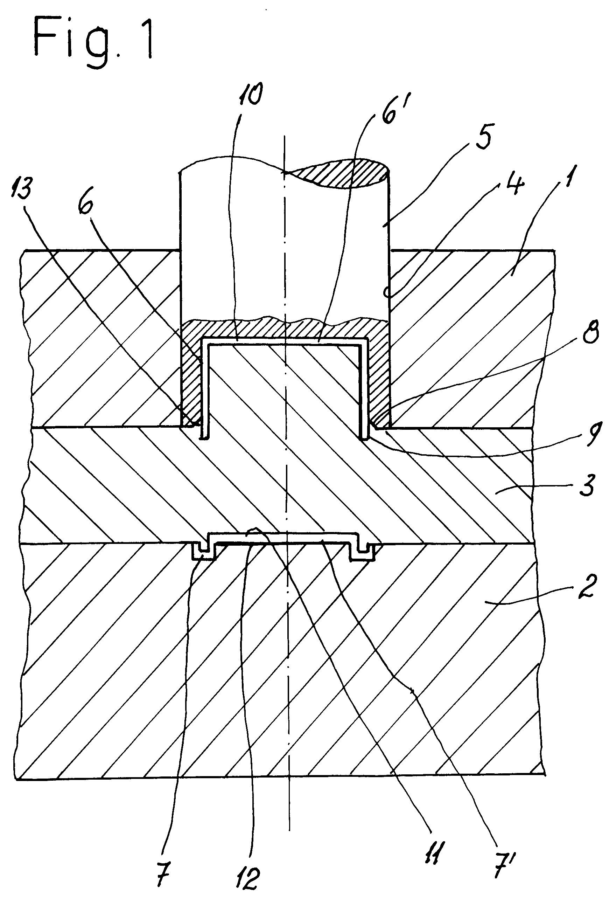

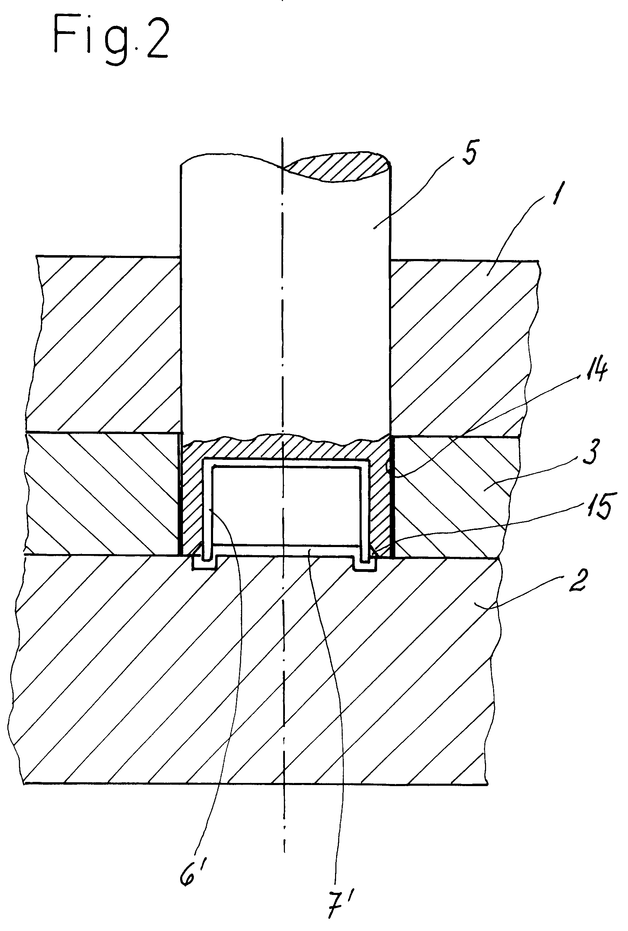

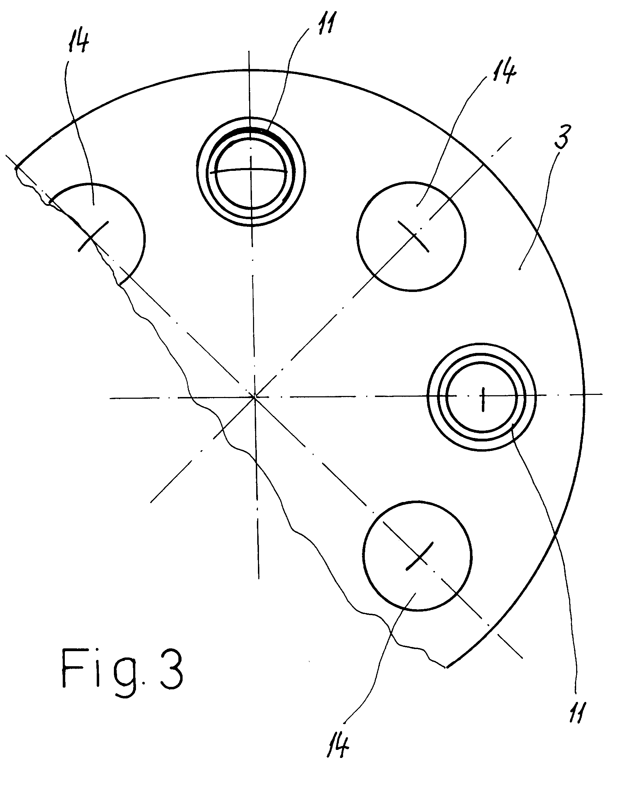

Das in den Fig. 1 und 2 im Ausschnitt gezeigte Spritzgießwerkzeug weist eine erste Formplatte 1 und eine zweite Formplatte 2 auf, zwischen denen eine Zwischenplatte 3 angeordnet ist. Die Formplatte 1 weist - in der Ausbildung des Spritzgießwerkzeugs als Mehrfachwerkzeug - mehrere Öffnungen 4 auf, in denen jeweils ein Formstempel 5 eingreift, der in Axialrichtung verlagerbar ist. Die Formplatte 2 ist zur nicht weiter gezeigten Spritzeinheit hin angeordnet und mit entsprechenden, gleichfalls nicht weiter gezeigten Spritzkanälen zur Zuführung des plastifizierten Kunststoffes in die zwischen den beiden Formplatten 1 und 2 und der Zwischenplatte 3 gebildeten Formnester 6 und 7 ausgestattet. Hierbei dient das Formnest 6 zur Bildung des einen Einzelteils 6' und das Formnest 7 zur Bildung des anderen Einzelteils 7'. Die vorliegende Spritzgießvorrichtung dient somit zur Herstellung von zweiteiligen Fertigteilen. Jedes Formnest 6 und 7 wird durch Teilkonturen bestimmt, die für das Formnest 6 in korrespondierender Anordnung auf der der Formplatte 1 zugewandten Seite der Zwischenplatte 3 (Formkonturen 9) und dem Formstempel 5 (Formkonturen 10) und für das Formnest 7 auf der der Formplatte 2 zugewandten Seite der Zwischenplatte oder -scheibe 3 (Formkonturen 11) und der Formplatte 2 (Formkonturen 12) vorgesehen sind. Des weiteren weist der Formstempel 5 eine ringförmige Abfasung 8 auf, in die in der Spritzstellung, wie in Fig. 1 gezeigt, ein entsprechend ausgebildeter Ringbund 13 der Zwischenplatte 3 eingreift. Die zwischen den beiden Formplatten 1 und 2 angeordnete Zwischenplatte oder -scheibe 3, die in der Draufsicht in Fig. 3 gezeigt ist, weist abwechselnd die bereits beschriebenen Formkonturen 11 (und auf der anderen Seite die Formkonturen 10) und die Durchgangsöffnungen 14 auf, deren Durchmesser mindestens dem Durchmesser des Formstempels 5 entspricht, so daß dieser die Öffnungen 14 durchgreifen kann. Bei der Ausbildung des Werkzeugs als Mehrfach-Drehwerkzeug ist die Zwischenplatte 3, wie in Fig. 3 schematisch dargestellt, rotationssymmetrisch gestaltet und die formbildenden Konturen 11 (und 10) sowie die Öffnungen 14 liegen auf einem Teilkreis, wobei im vorliegenden Fall insgesamt vier Öffnungen 14 und eine entsprechende Zahl von Formkonturen vorgesehen sind. Die Zwischenplatte 3 ist drehbar gelagert und relativ zu den Formplatten 1 und 2 um einen Teilungsschritt verdrehbar, so daß entweder die Formkonturen 10 und 11 oder eine der Öffnungen 14 in Korrelation mit dem Formstempel 5 stehen.

Das Verfahren zur Herstellung mehrteiliger Formteile im Spritzgießverfahren läuft folgendermaßen ab:
In der Spritzstellung (Fig. 1) nimmt die Zwischenscheibe 3 die in Fig. 3 gezeigte Stellung ein, bei der die einzelnen Formkonturen der Zwischenscheibe 3 und der beiden Formplatten 1 und 2 jeweils die Formnester 6 und 7 bilden. Es werden nun durch Einspritzen des Kunststoffes in die Formnester 6 und 7 in einem Schuß, jedoch getrennt voneinander, die Einzelteile 6' und 7' hergestellt. Bei der Öffnungsbewegung des Werkzeugs hebt die Formplatte 1 in Axialrichtung ab; nach dem axialen Abheben der Zwischenplatte 3 um einen bestimmten Betrag wird die Zwischenplatte 3 um den Teilungsschritt verdreht, so daß nun die Öffnung 14 der Zwischenscheibe 3 in koaxialer Ausrichtung zum Formstempel 5 steht, wie in Fig. 2 zu erkennen ist. Die beiden Einzelformteile 6' und 7' werden nun axial zusammengeführt und miteinander form- und/oder kraftschlüssig verbunden und montiert, so daß das aus den Einzelteilen 6' und 7' bestehende Fertigteil gebildet wird. Durch die ringförmige Ausnehmung 8 und dem entsprechend ausgebildeten Ringbund 13 entsteht im Bereich der Trennfuge zwischen den Einzelteilen 6' und 7' ein ringförmig umlaufender Hohlraum 15, der nach der Montage der beiden Einzelteile 6' und 7' mit Kunststoff ausgespritzt wird, so daß eine zusätzliche Verbindung der beiden Einzelteile 6' und 7' entsteht und das Fertigteil durch diese dichte Verbindung einen dichten Hohlkörper bildet. Bei der Montage der beiden Einzelteile 6' und 7' durch axiales Zusammenführen verbleiben die Einzelteile 6' und 7' also in ihren zugehörigen Formnestern 6 und 7 und werden im selben Werkzeug nicht nur gespritzt, sondern auch montiert. Beide Verfahrensvorgänge finden also in einem einzigen Werkzeug statt, so daß sich der Verfahrensablauf entsprechend verkürzt und Erzeugnisse hoher Qualität erhalten werden. Bei Mehrfachwerkzeugen werden entsprechend der Anzahl der Formnester mehrere Formteile gleichzeitig gefertigt.

## Patentansprüche

1. Verfahren zum Herstellen mehrteiliger Spritzguß-Formteile aus Kunststoff, dadurch gekennzeichnet, daß der gesamte Fertigungsvorgang in ein und demselben Werkzeug durchgeführt wird, derart, daß die Einzelteile (6', 7') des Formteils gleichzeitig in einem Schuß getrennt voneinander gespritzt und anschließend unter Verbleib in ihren Formnestern (6, 7) oder Teilen dieser Formnester axial zusammengeführt und form- und/oder kraftschlüssig zu einer Einheit montiert werden.

2. Verfahren nach Anspruch 1, dadurch gekennzeichnet, daß die Formteile zumindest teilweise im Bereich ihrer zwischen den Einzelteilen (6', 7') gebildeten Trennfuge bzw. Trennfugen mit Kunststoff umspritzt werden.

3. Spritzgießwerkzeug zur Durchführung des Verfahrens nach Anspruch 1 oder 2, dadurch gekennzeichnet, daß wenigstens eine Zwischenscheibe oder -platte (3) vorgesehen ist, die abwechselnd Formkonturen (10, 11) zur Bildung der Formnester (6, 7) der Einzelteile (6', 7') und Durchgangsöffnungen (14) zum axialen Zusammenführen der Einzelteile (6' 7') aufweist, wobei die Zwischenscheibe oder -platte (3) dreh- oder verschiebbar gelagert und jeweils zum Spritzen und Zusammenführen der Einzelteile (6', 7') mit ihren Formkonturen (10, 11) oder den Öffnungen (14) in Korrelation mit den Formnestern (6, 7) der Einzelteile (6', 7') positionierbar ist.

4. Spritzgießwerkzeug nach Anspruch 3, dadurch gekennzeichnet, daß wenigstens ein Formnest (6) für eines der Einzelteile (6') in einem axial verschiebbaren Stempel (5) angeordnet ist, der beim axialen Zusammenführen der Einzelteile (6', 7') die Öffnung (4) der Zwischenplatte bzw. -scheibe (3) durchgreift.

5. Spritzgießwerkzeug nach Anspruch 4, dadurch gekennzeichnet, daß der oder die Formstempel (5) in den der Zwischenplatte (3) zugeordneten Formplatten (1, 2) gelagert ist bzw. sind.

6. Spritzgießwerkzeug nach Anspruch 4 oder 5, dadurch gekennzeichnet, daß am Formstempel (5) und der Zwischenscheibe (3) im Bereich des einen Formnestes (6) und/oder der Formplatte (2) im Bereich des anderen Formnestes (7) in der Spritzstellung ineinandergreifende Vorsprünge (Ringbund 13) und Vertiefungen (Fase 8) zur Bildung eines oder mehrere Hohlräume (15) im Bereich der Trennfugen der zusammengeführten Einzelteile (6', 7') zum Einspritzen von Kunststoff angeordnet sind.

7. Spritzgießwerkzeug nach einem der Ansprüche 3 bis 6, dadurch gekennzeichnet, daß es als Mehrfachwerkzeug ausgebildet ist.
